# EUROPÄISCHE PATENTSCHRIFT

(11) **EP 3 091 143 B1**
(45) Veröffentlichungstag und Bekanntmachung des Hinweises auf die Patenterteilung: **26.02.2020**
(21) Anmeldenummer: 16173078.3
(22) Anmeldetag: 05.04.2012
(51) Int. Cl.: E04G 21/04, B66C 23/80, B66C 23/90, B60S 9/04

(54) **AUTOBETONPUMPE MIT ABSTÜTZVORRICHTUNG**
VEHICLE-MOUNTED CONCRETE PUMP WITH SUPPORTING DEVICE
POMPE À BÉTON MOBILE COMPRENANT UN DISPOSITIF D'APPUI

(30) Priorität: 05.05.2011 DE 102011075310
(43) Veröffentlichungstag der Anmeldung: 09.11.2016
(62) Teilanmeldung aus: 12714649.6
(73) Patentinhaber: Putzmeister Engineering GmbH, 72631 Aichtal (DE)
(72) Erfinder: GÖGGELMANN, Gernot, 72622 Nürtingen (DE); PETZOLD, Wolf-Michael, 73773 Aichwald (DE); NEUBERT, Michael, 72631 Aichtal (DE)
(74) Vertreter: Gauss, Nikolai

(56) Entgegenhaltungen:
- EP-A2- 1 849 931
- WO-A1-2010/003636
- DE-A1- 4 231 441
- DE-A1- 19 710 341
- DE-A1-102004 012 966
- DE-A1-102007 030 107
- DE-A1-102007 030 107
- JP-A- 2001 106 487
- US-B1- 6 351 696

## Beschreibung

Die Erfindung betrifft eine Autobetonpumpe, mit einem ein Fahrwerk aufweisenden Fahrgestell und einer am Fahrgestell angeordneten, unter Anheben des Fahrgestells auf einer Unterlage abstützbaren Abstützvorrichtung, wobei die Abstützvorrichtung unter Anheben des Fahrwerks auf der Unterlage abstützbar ist. Das Fahrgestell umfasst die tragenden Teile der fahrbaren Arbeitsmaschine. Am Fahrgestell ist das Fahrwerk befestigt, das die Gesamtheit aller beweglichen Teile umfasst, die der Verbindung zur Fahrbahn dienen. Zum Fahrwerk gehören insbesondere Räder, Radaufhängungen, Federungen, Stoßdämpfer und dergleiche Fahrwerksteile.

Es sind Arbeitsmaschinen dieser Art bekannt, die mit ausfahrbaren Stützauslegern als Abstützvorrichtung versehen sind, die am Einsatzort die Standfestigkeit des Arbeitsgeräts verbessern sollen. Die Stützausleger haben dabei einerseits die Aufgabe, die Fahrzeugfederung zu eliminieren und die Räder vom Untergrund abzuheben. Zum anderen sollen die Stützausleger die Kippgefahr vermindern, die sich ergibt, wenn über einen Arbeitsausleger hohe Kippmomente entstehen. Um eine Kippsicherung zu gewährleisten, wurde im Falle einer Autobetonpumpe mit Verteilermast bereits eine Überwachungseinrichtung vorgeschlagen (Zeitschrift "Beton" 6/96, Seiten 362, 364). Dort werden die in vier hydraulisch betätigten Teleskopzylindern der Stützbeine herrschenden Drücke überwacht. Lässt der Druck in zwei Stützbeinzylindern nach, werden die Mastbewegungen und die Mastpumpe abgeschaltet. Untersuchungen haben jedoch gezeigt, dass Druckmessungen in den Teleskopzylindern der Stützbeine für eine zuverlässige Stützbeinüberwachung nicht ausreichen. Dies gilt vor allem dann, wenn einer der Stützbeinzylinder auf Anschlag gefahren ist. Auch dynamische Abstützeffekte lassen sich mit diesem Überwachungssystem nicht erfassen. Um diese Nachteile zu vermeiden, wurde bereits vorgeschlagen (DE-A 101 10 176), dass im Fußteil eines jeden Stützbeins ein Kraftsensorpaar angeordnet ist. Jeder Kraftsensor ist dort in einem elektrischen Messkreis zur Abgabe einer stützlastabhängigen Messsignals angeordnet, wobei die Überwachungseinrichtung eine Auswerteelektronik umfasst, die in vorgegebenen Abtastzyklen mit den stützbeinbezogenen Stützlastmesswerten und zu deren Vergleich mit mindestens einem vorgegebenen stabilitätsbestimmenden Schwellenwert beaufschlagbar ist. Weiter ist es bei einer fahrbaren Arbeitsmaschine der eingangs angegebenen Art bekannt (DE-A 103 49 234), dass bei Stützauslegern, bei denen teleskopierbare Stützbeine mit einem auslegerfesten Teleskopglied mittels eines Anlenkbolzens an einem Stützbeinkasten angelenkt sind, der Anlenkbolzen als Messglied zur Bestimmung der Stützlast ausgebildet wird. In diesem Fall trägt der Anlenkbolzen mindestens einen Dehnmessstreifen zur Bestimmung der Bolzenbiegung oder der elastischen Scherverformung. Maschinen, die über eine Stützkraftüberwachung dieser Art verfügen, können aus der Summe ihrer ermittelten Gewichtslast das auf den Stützen lagernde Gesamtgewicht erfassen. Somit ist ein Rückschluss auf das angehobene Maschinengewicht und letztlich eine Aussage über den Aushub durch einen Vergleich mit einem hinterlegten Sollgewicht möglich.

Die DE 10 2004 012 966 A1 beschreibt eine Autobetonpumpe mit Stützauslegern und mit einem an dem Fahrgestell festgelegten, als eine elektronische Libelle ausgebildeten Neigungssensor, der es ermöglicht, die Neigung des Fahrgestells um die Fahrzeuglängsachse und die Fahrzeugquerachse zu erfassen.

Die DE 42 31 441 A1 offenbart einen Kran bzw. ein Hubrettungsfahrzeug, bei dem der Abstütz- oder Abhebezustand des Fahrgestells durch eine Druckmessung in einem Federfeststellzylinder bestimmt wird, der an eine Radfeder angeschlossen ist.

In der JP 2001 106487 A ist vorgeschlagen, einen Abstütz- oder Abhebezustands des Fahrgestells eines Hubsteilgers mittels Endschaltern zu erfassen, die mit den Radfedern bewegungsgekoppelt sind. Hier ist an dem Fahrgestell ein Abstandssensor angeordnet, der einen bei Biegebelastung sich ändernden Abstand einer ein Radaufhängungselement mit einem Radlager aufnehmenden Blattfeder zu dem Fahrgestell aufnimmt.

Bei Maschinen, die über keine Stützkraftüberwachung verfügen, gibt es bisher keine Vorkehrungen, die erkennen lassen, ob die Maschine in der Arbeitsposition ausreichend vom Untergrund abgehoben ist. Bei einer nur teilweise ausgehobenen Maschine fehlt der über die Bereifung in den Untergrund eingeleitete Gewichtsbetrag in der Standsicherheitsbilanz. Dies hat je nach Grad der Entlastung negative Folgen bis hin zum Kippen der Maschine.

Ausgehend hiervon wird gemäß der Erfindung vorgeschlagen, bei Arbeitsmaschinen technische Vorkehrungen zu treffen, die im Betriebszustand eine Aushubaussage ermöglichen.

Zur Lösung dieser Aufgabe werden die in dem Patentanspruch 1, dem Patentanspruch 2 und dem Patentanspruch 3 angegebenen Merkmale vorgeschlagen. Vorteilhafte Ausgestaltungen und Weiterbildungen der Erfindung ergeben sich aus den abhängigen Ansprüchen.

Der erfindungsgemäßen Lösung liegt insbesondere der Gedanke zugrunde, dass das Fahrwerk mindestens ein beim Abstützvorgang in seiner relativen Lage und/oder Neigung gegenüber dem Fahrgestell veränderbares Fahrwerksteil aufweist. Um eine Aushubaussage beim Abstützvorgang zu ermöglichen, wird gemäß der Erfindung vorgeschlagen, dass an dem genannten Fahrwerksteil mindestens ein Lagesensor angeordnet ist, dessen Ausgangssignal ein Ist-Maß für die Lage des Fahrwerksteils relativ zu einem erdfesten Bezugssystem bildet, und dass zusätzlich eine auf das Ausgangssignal des mindestens einen Lagesensors ansprechende Auswerteeinheit zur Bestimmung einer Maßzahl für den Abstütz- oder Abhebezustand des Fahrgestells vorgesehen ist.

Vorteilhafterweise umfasst die Auswerteeinheit einen Vergleicher zur Durchführung eines Vergleichs des mindestens einen Ist-Maßes für die Lage des Fahrwerksteils mit jeweils einem vorgegebenen Sollwert, dessen Ausgangssignal die Maßzahl für den Abstütz- oder Abhebezustand des Fahrgestells bildet.

Um die Zuverlässigkeit der Aushubaussage zu verbessern, ist jedem Lagesensor ein redundanter Lagesensor zugeordnet.

Eine weitere Erfindungsvariante besteht darin, dass der Lagesensor an einem beispielsweise als Stoßdämpfer oder als Radaufhängungselement ausgebildeten entfernungsändernden Fahrwerksteil angeordnet ist.

Der Lagesensor ist als ein Entfernungssensor ausgebildet. Für den Entfernungssensor kommt beispielsweise ein Seilzuggeber, eine Ultraschallquelle oder eine Laserlichtquelle als Signalquelle in Betracht.

Mit den erfindungsgemäßen Maßnahmen wird erreicht, dass auch Arbeitsmaschinen ohne integriertem Standsicherheitssystem nachträglich mit Überwachungselementen ausgestattet werden können, die eine Verringerung des Gefährdungspotentials in Bezug auf eine nicht ordnungsgemäße Abstützung ergibt und dadurch Unfälle, die auf mangelhafte Standsicherheit zurückzuführen sind, vermeidet.

Im Folgenden wird die Erfindung anhand der Zeichnung näher erläutert. Es zeigen
- Fig. 1 a und b: eine Seitenansicht einer Autobetonpumpe in Fahrstellung und in angehobener Arbeitsstellung;
- Fig. 2: eine Seitenansicht eines Fahrwerksteils mit vorderachsseitigem Stabilisator in abgesenkter und in Aushubstellung;
- Fig. 3a und b: eine Seitenansicht und eine Draufsicht eines Fahrwerksteils mit Hinterachsdreieckslenkern in abgesenkter und in Aushubstellung;
- Fig. 4: eine Seitenansicht eines Fahrwerkteils mit Entfernungssensoren im Bereich eines Radaufhängungselements und eines Stoßdämpfers.

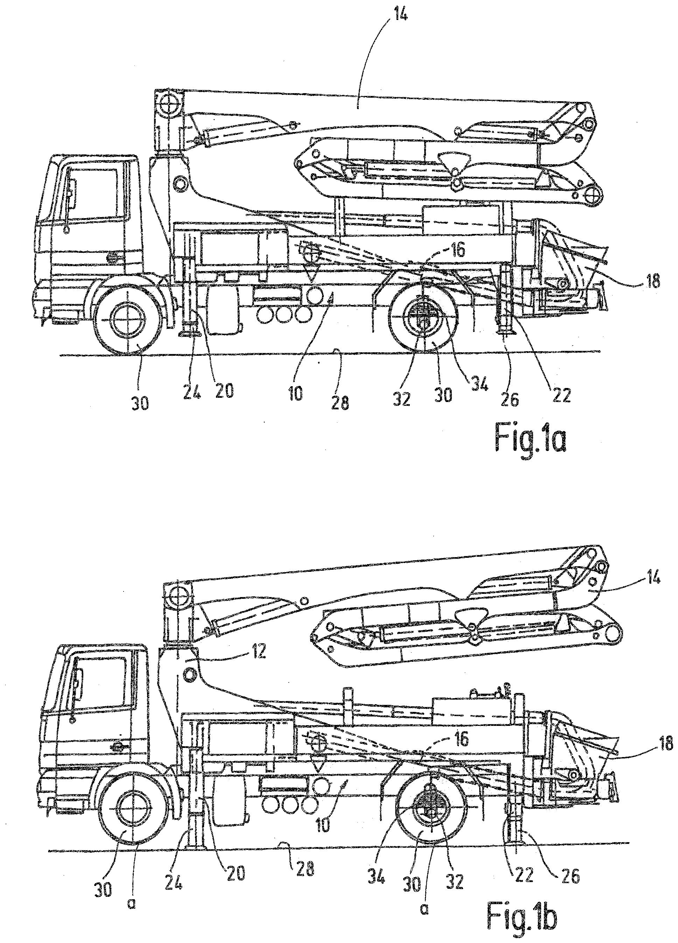

Die in Fig. 1a in Fahrstellung und in Fig. 1b in der angehobenen Arbeitsstellung dargestellte, als Autobetonpumpe ausgebildete fahrbare Arbeitsmaschine besteht im Wesentlichen aus einem zweiachsigen Fahrgestell 10, einem an einem vorderachsnahen Mastbock 12 um eine vertikale Achse drehbar gelagerten Betonverteilermast 14, einer Dickstoffpumpe 16 mit Materialaufgabebehälter 18 und einer aus zwei vorderen und zwei rückwärtigen Stützbeinen 20, 22 bestehenden Abstützvorrichtung. Die Stützbeine 20, 22 sind mit je einem nach unten ausfahrbaren Fußteil 24, 26 unter Anheben des Fahrgestells 10 und des daran befestigten Fahrwerks 11 auf dem Boden 28 abstützbar. Wie aus Fig. 1a und 1b zu ersehen ist, sind die Räder 30 der Hinterachse 32 unter Zwischenschaltung von durch Einwirkung der Achslast vorgespannten Radfedern 34 am Fahrgestell 10 aufgehängt. Die Radfedern 34 sind bei dem gezeigten Ausführungsbeispiel als geschichtete Blattfedern ausgebildet.

Eine Besonderheit der Erfindung besteht darin, dass an einem Fahrwerksteil 38, 38', das beim Abstützvorgang der Arbeitsmaschine über die Abstützvorrichtung 20, 22 in seiner relativen Lage gegenüber dem Fahrgestell 10 verändert wird, ein Lagesensor 36 angeordnet ist, dessen Ausgangssignal ein Ist-Maß für die Lage des Fahrwerksteils relativ zu einem fahrzeugfesten oder erdfesten Bezugssystem bildet. Zusätzlich ist eine in der Zeichnung nicht dargestellte, auf das Ausgangssignal des mindestens einen Lagesensors 36 ansprechende Auswerteeinheit vorgesehen, die dazu bestimmt und geeignet ist, eine Maßzahl für den Abstütz- oder Abhebezustand a des Fahrgestells zu bestimmen. Zu diesem Zweck weist die Auswerteeinheit einen Vergleicher zur Durchführung eines Vergleichs des mindestens einen Ist-Maßes für die Lage des Fahrwerksteils mit jeweils einem vorgegebenen Sollwert auf, dessen Ausgangssignal die Maßzahl für den Abstütz- oder Abhebezustand a des Fahrgestells bildet.

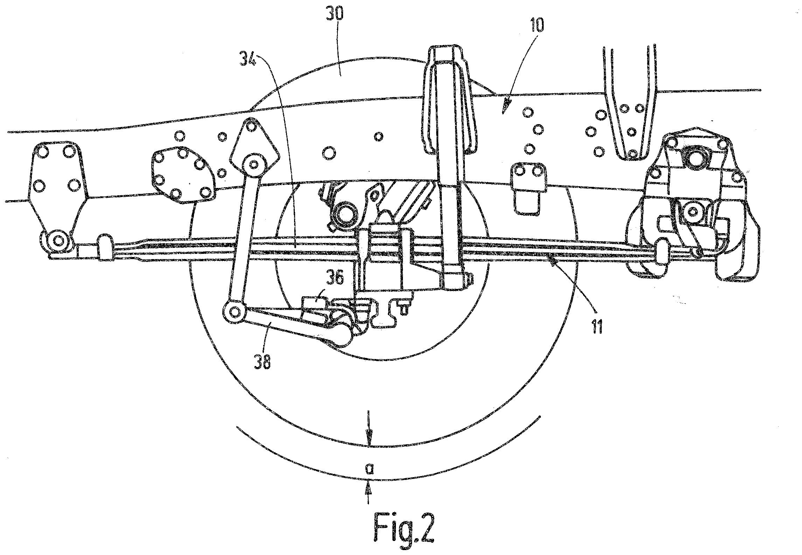

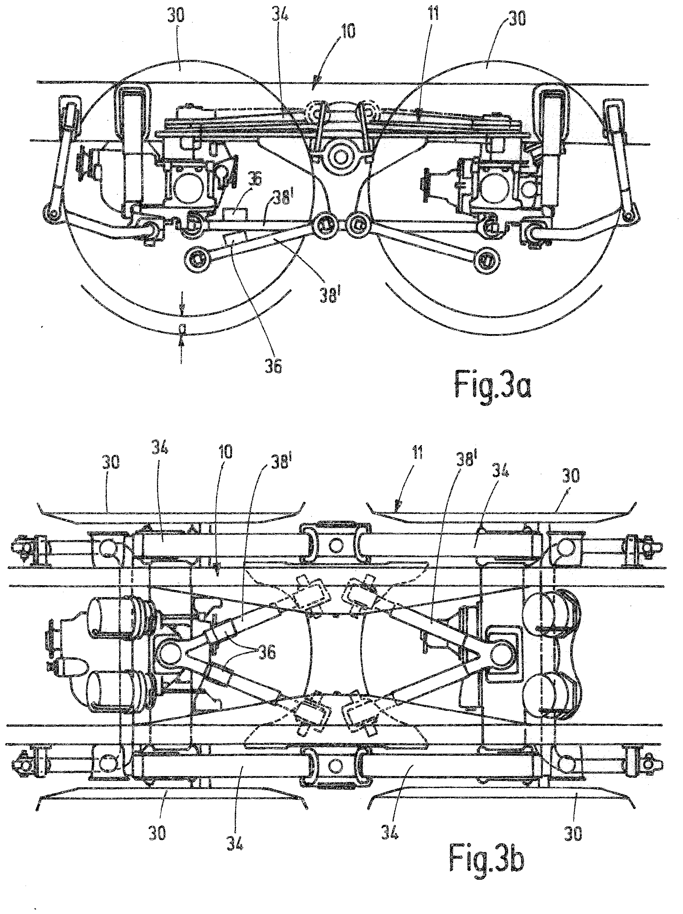

Bei dem in Fig. 2 gezeigten nicht beanspruchten Ausführungsbeispiel ist der Neigungssensor 36 beispielhaft an dem vorderachsseitigen Stabilisator als Fahrwerksteil 38 angeordnet, während im Falle der Fig. 3a und 3b, die ebenfalls ein nicht beanspruchtes Ausführungsbeispiel betreffen, der mindestens eine Neigungssensor 36 an einem Hinterachsdreieckslenker als Fahrwerksteil 38' angeordnet ist.

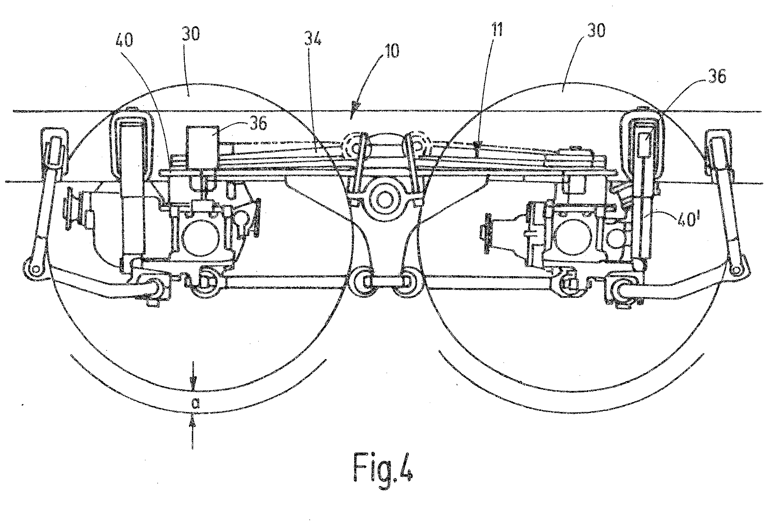

Bei der in Fig. 4 gezeigten Ausführungsform ist beispielhaft je ein als Entfernungssensor ausgebildeter Lagesensor 36 im Bereich eines als Radaufhängungselement 40 (links) und als Stoßdämpfer 40' (rechts) ausgebildetes entfernungsänderndes Fahrwerksteil angeordnet. Jedem der vorder- und rückseitigen Stützbeine 20, 22 ist dabei mindestens ein Lagesensor 36 zugeordnet, wobei die Gesamtheit der Ausgangssignale der Lagesensoren 36 den Abstütz- oder Aushubzustand der Arbeitsmaschine definieren. Zur Erhöhung der Zuverlässigkeit sind jedem Stützbein 20, 22 der Abstützvorrichtung zwei redundante Lagesensoren 36 zugeordnet, deren Ausgangssignale beispielsweise in einer Brückenschaltung der Auswerteeinheit zusammengeschaltet sein können. Grundsätzlich ist es möglich, auch einen als Entfernungssensor oder Näherungssensor ausgebildeten Lagesensor zu verwenden, der auf eine fahrgestellfeste oder erdfeste Bezugspartie ausgerichtet ist. Umgekehrt kann der Lagesensor auch an einer fahrgestellfesten Stelle angeordnet werden, die auf eine fahrwerksfeste oder erdfeste Bezugspartie ausgerichtet werden kann. Die nicht dargestellte fahrwerkfeste Bezugspartie oder Befestigungsstelle für den Lagesensor kann dabei an einem Stoßdämpfer oder an einem Radaufhängungselement angeordnet sein. Als Entfernungssensor wird zweckmäßig eine Ultraschallquelle oder eine Laserlichtquelle als Signalquelle verwendet.

### Bezugszeichenliste

- 10: Fahrgestell
- 11: Fahrwerk
- 12: Mastbock
- 14: Betonverteilermast
- 16: Dickstoffpumpe
- 18: Materialaufgabebehälter
- 20: vordere Stützbeine (Abstützvorrichtung)
- 22: rückwärtige Stützbeine (Abstützvorrichtung)
- 24: Fußteil
- 26: Fußteil
- 28: Boden (Unterlage)
- 30: Räder
- 32: Hinterachse
- 34: Radfedern
- 36: Lage- oder Neigungssensor
- 38, 38': Fahrwerksteil
- 40: Radaufhängungselement
- 40': Stoßdämpfer

## Patentansprüche

1. Autobetonpumpe mit einem ein Fahrwerk (11) aufweisenden Fahrgestell (10) und einer am Fahrgestell (10) angeordneten, unter Anheben des Fahrgestells (10) auf einer Unterlage (28) abstützbaren Abstützvorrichtung (20, 22), wobei die Abstützvorrichtung (20, 22) unter anheben des Fahrwerks (11) auf der Unterlage abstützbar ist, **dadurch gekennzeichnet, dass** das Fahrwerk (11) mindestens ein beim Abstützvorgang in seiner relativen Lage gegenüber dem Fahrgestell (10) veränderbares Fahrwerksteil (38, 38') aufweist und dass mindestens ein Lagesensor (36) vorgesehen ist, dessen Ausgangssignal ein Ist-Maß für die Lage des Fahrwerksteils (38, 38') relativ zu einem erdfesten Bezugssystem bildet, und dass zusätzlich eine auf das Ausgangssignal des mindestens einen Lagesensors (36) ansprechende Auswerteeinheit zur Bestimmung einer Maßzahl für den Abstütz- oder Abhebezustand des Fahrgestells vorgesehen ist, wobei der Lagesensor an einem vorzugsweise als Stoßdämpfer oder als Radaufhängungselement ausgebildeten zum Fahrgestell (10) entfernungsändernden Fahrwerksteil angeordnet und als ein auf eine erdfeste Bezugspartie ausgerichteter Entfernungssensor oder Näherungssensor ausgebildet ist.

2. Autobetonpumpe mit einem ein Fahrwerk (11) aufweisenden Fahrgestell (10) und einer am Fahrgestell (10) angeordneten, unter Anheben des Fahrgestells (10) auf einer Unterlage (28) abstützbaren Abstützvorrichtung (20, 22), wobei die Abstützvorrichtung (20, 22) unter anheben des Fahrwerks (11) auf der Unterlage abstützbar ist, **dadurch gekennzeichnet, dass** das Fahrwerk (11) mindestens ein beim Abstützvorgang in seiner relativen Lage gegenüber dem Fahrgestell (10) veränderbares Fahrwerksteil (38, 38') aufweist und dass mindestens ein Lagesensor (36) vorgesehen ist, dessen Ausgangssignal ein Ist-Maß für die Lage des Fahrwerksteils (38, 38') relativ zu einem erdfesten Bezugssystem bildet, und dass zusätzlich eine auf das Ausgangssignal des mindestens einen Lagesensors (36) ansprechende Auswerteeinheit zur Bestimmung einer Maßzahl für den Abstütz- oder Abhebezustand des Fahrgestells vorgesehen ist, wobei der Lagesensor (36) als an einer fahrgestellfesten Stelle angeordneter Entfernungssensor oder Näherungssensor ausgebildet und auf eine erdfeste Bezugspartie ausgerichtet ist.

3. Autobetonpumpe mit einem ein Fahrwerk (11) aufweisenden Fahrgestell (10) und einer am Fahrgestell (10) angeordneten, unter Anheben des Fahrgestells (10) auf einer Unterlage (28) abstützbaren Abstützvorrichtung (20, 22), wobei die Abstützvorrichtung (20, 22) unter anheben des Fahrwerks (11) auf der Unterlage abstützbar ist, **dadurch gekennzeichnet, dass** das Fahrwerk (11) mindestens ein beim Abstützvorgang in seiner relativen Lage gegenüber dem Fahrgestell (10) veränderbares Fahrwerksteil (38, 38') aufweist und dass an dem Fahrwerksteil (38, 38') mindestens ein Lagesensor (36) vorgesehen ist, dessen Ausgangssignal ein Ist-Maß für die Lage des Fahrwerksteils (38, 38') relativ zu einem fahrzeugfesten oder erdfesten Bezugssystem bildet, und dass zusätzlich eine auf das Ausgangssignal des mindestens einen Lagesensors (36) ansprechende Auswerteeinheit zur Bestimmung einer Maßzahl für den Abstütz- oder Abhebezustand des Fahrgestells vorgesehen ist, wobei der Lagesensor (36) als an einem Fahrwerksteil aus der Gruppe Stoßdämpfer, Radaufhängungselement angeordneter Entfernungssensor oder Näherungssensor ausgebildet und auf eine erdfeste Bezugspartie ausgerichtet ist.

4. Autobetonpumpe nach Anspruch 1 oder Anspruch 2 oder Anspruch 3, **dadurch gekennzeichnet, dass** die Auswerteeinheit einen Vergleicher zur Durchführung eines Vergleichs des mindestens einen Ist-Maßes für die Lage des Fahrwerksteils (38, 38') mit jeweils einem vorgegebenen Sollwert umfasst, dessen Ausgangssignal die Maßzahl für den Abstütz- oder Abhebezustand des Fahrgestells (10) bildet.

5. Autobetonpumpe nach einem der Ansprüche 1 bis 4, **dadurch gekennzeichnet, dass** der Lagesensor als ein Entfernungssensor ausgebildet ist, der einen Seilzuggeber, eine Ultraschallquelle oder eine Laserlichtquelle als Signalquelle aufweist.

6. Autobetonpumpe nach einem der Ansprüche 1 bis 4, **dadurch gekennzeichnet, dass** das Fahrgestell (10) eine hinterachsseitig angeordnete Betonpumpe mit Materialaufgabenbehälter sowie einen Betonverteilermast (14) und eine an die Betonpumpe (16) angeschlossene, über den Betonverteilermast (14) geführte Förderleitung trägt.

## Claims

1. Truck-mounted concrete pump comprising a frame (10) which has a chassis (11) and comprising a support device (20, 22) which is arranged on the frame (10) and can be supported on a base (28) so as to lift the frame (10), the support device (20, 22) being able to be supported on the base so as to lift the chassis (11), **characterized in that** the chassis (11) has at least one chassis part (38, 38'), the relative position of which in relation to the frame (10) can be changed during the supporting process, and **in that** at least one position sensor (36) is provided, the output signal of which forms an actual measure for the position of the chassis part (38, 38') relative to an earth-fixed reference system, and **in that** an evaluation unit which responds to the output signal of the at least one position sensor (36) is also provided for determining a measured value for the supporting or lifting state of the frame, the position sensor being arranged on a chassis part which is designed preferably as a shock absorber or as a wheel suspension element and is designed to change the distance from the frame (10), and being designed as a distance sensor or proximity sensor aligned with an earth-fixed reference part.

2. Truck-mounted concrete pump comprising a frame (10) which has a chassis (11) and comprising a support device (20, 22) which is arranged on the frame (10) and can be supported on a base (28) so as to lift the frame (10), the support device (20, 22) being able to be supported on the base so as to lift the chassis (11), **characterized in that** the chassis (11) has at least one chassis part (38, 38'), the relative position of which in relation to the frame (10) can be changed during the supporting process, and **in that** at least one position sensor (36) is provided, the output signal of which forms an actual measure for the position of the chassis part (38, 38') relative to an earth-fixed reference system, and **in that** an evaluation unit which responds to the output signal of the at least one position sensor (36) is also provided for determining a measured value for the supporting or lifting state of the frame, the position sensor (36) being designed as a distance sensor or proximity sensor arranged at a point fixed on the frame and being aligned with an earth-fixed reference part.

3. Truck-mounted concrete pump comprising a frame (10) which has a chassis (11) and comprising a support device (20, 22) which is arranged on the frame (10) and can be supported on a base (28) so as to lift the frame (10), the support device (20, 22) being able to be supported on the base so as to lift the chassis (11), **characterized in that** the chassis (11) has at least one chassis part (38, 38'), the relative position of which in relation to the frame (10) can be changed during the supporting process, and **in that** at least one position sensor (36) is provided on the chassis part (38, 38'), the output signal of which sensor forms an actual measure for the position of the chassis part (38, 38') relative to a vehicle-fixed or earth-fixed reference system, and **in that** an evaluation unit which responds to the output signal of the at least one position sensor (36) is also provided for determining a measured value for the supporting or lifting state of the frame, the position sensor (36) being designed as a distance sensor or proximity sensor arranged on a chassis part from the group of shock absorber or wheel suspension element and being aligned with an earth-fixed reference part.

4. Truck-mounted concrete pump according to claim 1 or claim 2 or claim 3, **characterized in that** the evaluation unit comprises a comparator for carrying out a comparison of the at least one actual measure for the position of the chassis part (38, 38') with a predetermined target value, the output signal of which forms the measured value for the supporting or lifting state of the frame (10).

5. Truck-mounted concrete pump according to any of claims 1 to 4, **characterized in that** the position sensor is designed as a distance sensor which has a draw-wire encoder, an ultrasound source or a laser light source as a signal source.

6. Truck-mounted concrete pump according to any of claims 1 to 4, **characterized in that** the frame (10) supports a concrete pump which is arranged on the rear axle and has a material feed container, as well as a concrete distributor mast (14) and a delivery line which is connected to the concrete pump (16) and guided via the concrete distributor mast (14).

## Revendications

1. Pompe à béton automotrice avec un châssis (10) présentant un train de roulement (11) et un dispositif d'appui (20, 22) disposé sur le châssis (10), qui peut prendre appui sur un support (28) lorsque le châssis (10) est soulevé, dans lequel le dispositif d'appui (20, 22) peut prendre appui sur le support lorsque le train de roulement (11) est soulevé, **caractérisée en ce que** le train de roulement (11) présente au moins une partie de train de roulement (38, 38') dont la position relative par rapport au châssis (10) peut être modifiée pendant le processus de mise en appui, et **en ce qu'**au moins un capteur de position (36) est prévu, dont le signal de sortie forme une mesure réelle de la position de la partie de train de roulement (38, 38') par rapport à un système de référence fixe par rapport à la terre, et **en ce qu'**il est prévu en outre une unité d'évaluation répondant au signal de sortie de l'au moins un capteur de position (36) pour déterminer une mesure de l'état d'appui ou de soulèvement du châssis, le capteur de position étant disposé sur une partie de train de roulement qui est de préférence conçue comme un amortisseur ou comme un élément de suspension de roue et qui modifie la distance par rapport au châssis (10) et qui est conçue comme un capteur de distance ou un capteur de proximité aligné avec une partie de référence fixe par rapport à la terre.

2. Pompe à béton automotrice avec un châssis (10) présentant un train de roulement (11) et un dispositif d'appui (20, 22) disposé sur le châssis (10), qui peut s'appuyer sur un socle (28) lorsque le châssis (10) est soulevé, dans lequel le dispositif d'appui (20, 22) peut prendre appui sur le support lorsque le train de roulement (11) est soulevé, **caractérisée en ce que** le train de roulement (11) présente au moins une partie de train de roulement (38, 38') dont la position relative par rapport au châssis (10) peut être modifiée pendant le processus de mise en appui, et **en ce qu'**au moins un capteur de position (36) est prévu, dont le signal de sortie forme une mesure réelle de la position de la partie de train de roulement (38, 38') par rapport à un système de référence fixe par rapport à la terre, et **en ce qu'**une unité d'évaluation répondant au signal de sortie de l'au moins un capteur de position (36) est en outre prévue pour déterminer une mesure de l'état d'appui ou de soulèvement du châssis, le capteur de position (36) étant conçu comme un capteur de distance ou un capteur de proximité disposé en un point fixe par rapport au châssis et aligné avec une partie de référence fixe par rapport à la terre.

3. Pompe à béton automotrice avec un châssis (10) présentant un train de roulement (11) et un dispositif d'appui (20, 22) disposé sur le châssis (10) et pouvant s'appuyer sur un support (28) lorsque le châssis (10) est soulevé, le dispositif d'appui (20, 22) pouvant s'appuyer sur le support lorsque le train de roulement (11) est soulevé, **caractérisée en ce que** le train de roulement (11) présente au moins une partie de train de roulement (38, 38') dont la position relative par rapport au châssis (10) peut être modifiée pendant le processus de mise en appui et **en ce qu'**au moins un capteur de position (36) est prévu sur la partie de train de roulement (38, 38'), dont le signal de sortie forme une mesure réelle de la position de la partie de train de roulement (38, 38') par rapport à un système de référence fixé au véhicule ou à la terre, et **en ce qu'**il est prévu en outre une unité d'évaluation répondant au signal de sortie de l'au moins un capteur de position (36) pour déterminer une mesure de l'état d'appui ou de soulèvement du châssis, le capteur de position (36) étant réalisé sous la forme d'un capteur de distance ou d'un capteur de proximité disposé sur une partie de train de roulement dans le groupe constitué de l'amortisseur, de l'élément de suspension de roue, et étant aligné sur une partie de référence fixée à la terre.

4. Pompe à béton automotrice selon la revendication 1 ou la revendication 2 ou la revendication 3, **caractérisée en ce que** l'unité d'évaluation comprend un comparateur pour effectuer une comparaison de l'au moins une dimension réelle pour la position de la partie de train de roulement (38, 38') avec une valeur de consigne prédéterminée dans chaque cas, dont le signal de sortie forme la mesure pour l'état d'appui ou de soulèvement du châssis (10).

5. Pompe à béton automotrice selon l'une quelconque des revendications 1 à 4, **caractérisée en ce que** le capteur de position est conçu comme un capteur de distance qui présente un capteur de traction de câble, une source d'ultrasons ou une source de lumière laser comme source de signal.

6. Pompe à béton automotrice selon l'une quelconque des revendications 1 à 4, **caractérisée en ce que** le châssis (10) supporte une pompe à béton disposée du côté de l'essieu arrière avec un réservoir d'alimentation en matériau ainsi qu'une flèche de pose de béton (14) et une conduite de refoulement reliée à la pompe à béton (16) et guidée par la flèche de pose de béton (14).
